# EUROPEAN PATENT APPLICATION

(11) **EP 4 205 931 A1**
(43) Date of publication of application: **05.07.2023**
(21) Application number: 22217147.2
(22) Date of filing: 29.12.2022
(51) Int. Cl.: B29B 7/16, B29B 7/44

(54) **METHOD OF AGITATING A POLYMER COMPOSITION, AND AGITATOR**

(30) Priority: 30.12.2021 BE 202106106
(71) Applicant: Soudal N.V., 2300 Turnhout (BE)
(72) Inventor: JANSSENS, Kristof, 2300 Turnhout (BE); BELIËN, Ulric, 2300 Turnhout (BE); AERTS, Hans, 2300 Turnhout (BE); FEREMANS, Walter, 2300 Turnhout (BE)
(74) Representative: Brantsandpatents bv

(57) **Abstract**

Method of agitation of a polymer composition in a mixing vat by means of an agitator, wherein one or more ingredients are added to a mass present in the mixing vat, wherein the agitator comprises one or more agitator arms, wherein the one or more agitator arms comprise a free end, wherein the one or more agitator arms are provided with a mixing disc or a mixing blade at the free end and wherein at least one of the agitator arms is provided with an additional mixing blade, wherein before adding the one or more ingredients the additional mixing blade is placed at a distance from the mixing disc or mixing blade at the free end of said agitator arm, wherein the distance is at least 15% of an internal height of the mixing vat, and wherein the additional mixing blade is placed at most 10 cm above a level of the mass in the mixing vat.

## Description

### TECHNICAL FIELD

The invention relates to a method of agitation of a polymer composition in a mixing vat, an agitator and the final products obtained.

### PRIOR ART

Polymer compositions are often obtained by mixing several ingredients in a mixing vat. For example, CN211968015U describes a mixing device for mixing a polystyrene polymer composition for the manufacture of shoes. Mixing vats are often used for this purpose with an agitator, consisting of a disc or blade placed at the bottom of an agitator arm, the disc or blade being located at the level of the bottom of the mixing vat.

However, these agitators are not able to obtain enough vertical flow in the somewhat viscous mass of the polymer composition. As a result, liquids or powders that are added to this mass remain on top of the mass for a long time before they are mixed into the matrix. This can have various adverse effects, such as a longer mixing time and/or the need for a higher mixing speed. This can result in a higher energy consumption and can lead to an unwanted rise in the temperature in the mixing vat. Quality problems can also arise if mixing is not done quickly enough. For example, undesired chemical reactions can occur because certain ingredients come into contact with each other in undiluted form. Undesired physical reactions can also occur as a result, for example the formation of lumps in the case of powders that are difficult to disperse.

The present invention aims to find a solution for at least some of the above problems.

### SUMMARY OF THE INVENTION

The invention relates to a method of agitation of a polymer composition in a mixing vat by means of an agitator. More particularly, the invention relates to a method according to claim 1, wherein one or more ingredients are added to a mass present in the mixing vat, wherein the agitator comprises one or more agitator arms, wherein the one or more agitator arms comprise a free end which is located during agitation in the mass in the mixing vat, wherein the one or more agitator arms are provided with a mixing disc or a mixing blade at the free end and wherein at least one of the agitator arms is provided with an additional mixing blade for creating a vortex in the mass in the mixing vat, wherein before adding the one or more ingredients the additional mixing blade is placed at a distance from the mixing disc or mixing blade at the free end of said agitator arm, wherein the distance is at least 15% of an internal height of the mixing vat, wherein the distance parallel to said agitator arm is measured from the center of the additional mixing blade to a most proximal side of the mixing disc or to the center of the mixing blade at the free end of said agitator arm, and wherein the additional mixing blade is placed at most 10 cm above a level of the mass in the mixing vat, measured parallel to said agitator arm from an underside of the additional mixing blade. Preferred embodiments of the method are presented in claims 2-8.

In the method according to the present invention, a vortex is created by agitating the agitator. Such a vortex ensures a good and rapid mixing of the ingredients, so that the adverse effects of slow or inefficient mixing, such as higher energy consumption, an undesirably high temperature during mixing and/or undesired chemical and/or physical reactions between the various ingredients, can be avoided. Due to the specific placement of the one or more additional mixing blades, it is possible to optimize this mixing depending on the conditions.

In a second aspect, the invention relates to an agitator of a mixing vat. More particularly, the invention relates to an agitator according to claim 9, the agitator comprising a lid for closing the mixing vat, wherein the agitator comprises one or more agitator arms, wherein the one or more agitator arms extend through the lid, wherein the one or more agitator arms comprise a free end, wherein the one or more agitator arms are provided with a mixing disc or a mixing blade at the free end and wherein at least one of the agitator arms is provided with an additional mixing blade and wherein the additional mixing blade is adjustable in height in the mixing vat along the agitator arm. Preferred embodiments of the agitator are shown in claims 10-14.

In a final aspect, the invention relates to the use of the aforementioned method. More particularly, the invention relates to a use according to claim 15, wherein the polymer composition comprises at least silicone, polyurethanes, acrylates and/or silane modified polymers.

### DETAILED DESCRIPTION

The invention relates to a method of agitation of a polymer composition in a mixing vat by means of an agitator, wherein the agitator comprises one or more agitator arms with a free end which is located during agitation in the mass in the mixing vat, wherein the one or more agitator arms are provided with a mixing disc or a mixing blade at the free end and wherein at least one of the agitator arms is provided with an additional mixing blade for creating a vortex in the mass in the mixing vat, wherein before adding the one or more ingredients the additional mixing blade is placed at a distance from the mixing disc or mixing blade at the free end of said agitator arm, wherein the distance is at least 15% of an internal height of the mixing vat, and wherein the additional mixing blade is placed at most 10 cm above a level of the mass in the mixing vat. By placing an additional mixing blade at a distance from the mixing disc or mixing blade at the free end of said agitator arm, wherein the distance is at least 15% of an internal height of the mixing vat, and wherein the additional mixing blade is placed at most 10 cm above a level of the mass in the mixing vat, a vortex is created when the agitator is stirred. Such a vortex ensures a good and rapid mixing of the ingredients, so that the adverse effects of slow or inefficient mixing, such as higher energy consumption, an undesirably high temperature during mixing and/or undesired chemical and/or physical reactions between the various ingredients, can be avoided. Due to the specific placement of the one or more additional mixing blades, it is possible to optimize this mixing depending on the conditions.

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

The terms "comprise," "comprising," "consist of," "consisting of," "provided with," "have," "having," "include," "including," "contain," "containing" are synonyms and are inclusive or open terms that indicate the presence of what follows, and which do not exclude or prevent the presence of other components, characteristics, elements, members, steps, as known from or disclosed in the prior art.

In the context of this document, rpm is the abbreviation for revolutions per minute.

Quoting numerical intervals by endpoints comprises all integers, fractions and/or real numbers between the endpoints, these endpoints included.

In a first aspect, the invention relates to a method of agitation of a polymer composition in a mixing vat by means of an agitator, wherein one or more ingredients are added to a mass present in the mixing vat, wherein the agitator comprises one or more agitator arms, wherein the one or more agitator arms comprise a free end which is located during agitation in the mass in the mixing vat, wherein the one or more agitator arms are provided with a mixing disc or a mixing blade at the free end and wherein at least one of the agitator arms is provided with an additional mixing blade for creating a vortex in the mass in the mixing vat, wherein before adding the one or more ingredients the additional mixing blade is placed at a distance from the mixing disc or mixing blade at the free end of said agitator arm, wherein the distance is at least 15% of an internal height of the mixing vat, wherein the distance parallel to said agitator arm is measured from the center of the additional mixing blade to a most proximal side of the mixing disc or to the center of the mixing blade at the free end of said agitator arm, and wherein the additional mixing blade is placed at most 10 cm above a level of the mass in the mixing vat, measured parallel to said agitator arm from an underside of the additional mixing blade.

By placing an additional mixing blade at a distance from the mixing disc or mixing blade at the free end of said agitator arm, wherein the distance is at least 15% of an internal height of the mixing vat, and wherein the additional mixing blade is placed at most 10 cm above a level of the mass in the mixing vat, a vortex is created when the agitator is stirred. Such a vortex ensures a good and rapid mixing of the ingredients, so that the adverse effects of slow or inefficient mixing, such as higher energy consumption, an undesirably high temperature during mixing and/or undesired chemical and/or physical reactions between the various ingredients, can be avoided. For example, if the additional mixing blade were placed at too close a distance from the mixing disc or mixing blade at the free end of said agitator arm, the additional mixing blade would not be able to create a vortex, for example, which would sufficiently agitate the mass in the upper part of the mixing vat. On the other hand, if the additional mixing blade is placed more than 10 cm above a level of the mass in the mixing vat, after adding one or more ingredients, the additional mixing blade will, for example, not be able to create a vortex that will sufficiently agitate the mass in the lower part of the mixing vat.

In a preferred embodiment of the method, the agitator comprises a first and a second agitator arm, provided with a first and a second additional mixing blade, respectively. According to an embodiment, both additional mixing blades are at the same height. In another embodiment, the two additional mixing blades are located at different heights.

According to an embodiment, the first and second additional mixing blades are placed at a first distance and a second distance, respectively, from the mixing disc or mixing blade at the free end of the respective agitator arm, and the distance between the first and second additional mixing blades is at least 4% and at most 10% of the internal height of the mixing vat. By placing the additional mixing blades at such a different height, an optimal vortex is created.

In a further embodiment, the agitator comprises a first and a second agitator arm, provided with a first and a second additional mixing blade, respectively, wherein, before adding the one or more ingredients, 45%-55% of the first additional mixing blade is in the mass present in the mixing vat and the second additional mixing blade is at most 10 cm above the level of the mass in the mixing vat, measured parallel to said agitator arm from an underside of the additional mixing blade. In this embodiment, both additional mixing blades are located at the level of the free surface of the mass, where the ingredients are added. Due to such an arrangement of the mixing blades, the added ingredients will be immersed in the mass extremely quickly and the contact time between the undiluted ingredients and the mass and the contact time between the undiluted ingredients and ambient air and moisture, as well as the associated undesirable physical and chemical reactions are minimized.

In an alternative further embodiment, the agitator comprises a first and a second agitator arm, provided with a first and a second additional mixing blade, respectively, the additional mixing blades being placed at a distance from the mixing disc or mixing blade at the free end of said agitator arm, wherein the distance is at most 40% of an internal height of the mixing vat. In this embodiment, both additional mixing blades are located just below the level of the mass in the mixing vat and a vortex will be created mainly when the agitator is stirred, whereby the agitation creates an intense internal liquid circulation that entrains added ingredients in its flow.

According to an embodiment, a rotary motion scrapes the side walls and bottom of the mixing vat during agitation. This prevents the mass in the mixing vat from adhering to the side walls and the bottom of the mixing vat. In a preferred embodiment, the side walls and the bottom are scraped by means of a U-shaped scraper.

In a preferred embodiment, the mixing vat with its contents is placed under negative pressure at least during part of the method.

The polymer compositions that are mixed according to the present invention are often products that cure by chemical reaction with water or moisture. By placing the closed mixing vat under negative pressure, a large part of the remaining air is removed from the mixing vat, together with the humidity contained therein, so that this amount cannot react with the polymer composition in the mixing vat. This prevents the polymer composition from curing and forming undesired skins. Agitation of the contents of the mixing vat during the negative pressure period ensures homogenization of the contents of the mixing vat and also a smooth reduction of any moisture that may still be dissolved in the liquid in the mixing vat, as this allows the concentration of dissolved moisture over the entire liquid content to attempt to remain in equilibrium with the low vapor pressure of water in the gas phase above the liquid level.

According to an embodiment of the method, a polymer or a polymer dispersion is present in the mixing vat and one or more ingredients are added in powder or liquid form, wherein the one or more added ingredients are selected from the group of plasticizers, crosslinkers, extenders, fillers, thickeners, catalysts and/or pigments. According to an embodiment, in addition to a polymer or a polymer dispersion, a plasticizer is already present in the mixing vat before one or more ingredients are added. In an embodiment, the polymer is a reactive polymer such as silicone, silane modified polymers, and polyurethanes, wherein the polymer cures under the influence of the humidity. In another embodiment, the polymer is a non-reactive polymer, such as an acrylate. These non-reactive polymers cure by physical drying, i.e. upon evaporation of water or solvent.

In a further preferred embodiment, a crosslinker is added to a reactive polymer, wherein the crosslinker is dispersed in the contents of the mixing vat and the agitation speed of the agitator in the mixing vat being limited to a maximum of 300 revolutions per minute (rpm) during dispersion.

Limiting the agitation speed during the reaction reduces the risk of liquid splashing up. The splashing liquid can adhere to the inside of the mixing vat lid, preventing that part of the liquid from leaving the mixing vat when it is emptied through the outlet nozzle. As a result, it is lost to the batch that is in production. In addition, it remains in the lid when the lid is removed from the mixing vat, where it can react with humidity and begin to cure, giving rise to the formation of unwanted skins. Thus, by reducing the agitation speed during the reaction, the risk of skin formation is ultimately reduced. An additional advantage is that the reduced agitation speed also saves energy. Another additional advantage is that the heating of the contents of the mixing vat caused by the action of the shear forces on the liquid is less high.

To accelerate the curing in the final application, a catalyst is usually also added. In order to eventually form a paste during production, which is suitable for easy application of the final product, a thickening agent (such as silicic acid) or a filler (such as calcium carbonate) is added to change the rheology. As a result, the still quite liquid reaction product stiffens into a paste that is mainly a viscoelastic substance. In an embodiment, the polymer is a silicone and silicic acid (SiO2) is added as a thickener.

In a second aspect, the invention relates to an agitator of a mixing vat, the agitator comprising a lid for closing the mixing vat, wherein the agitator comprises one or more agitator arms, wherein the one or more agitator arms extend through the lid, wherein the one or more agitator arms comprise a free end, wherein the one or more agitator arms are provided with a mixing disc or a mixing blade at the free end and wherein at least one of the agitator arms is provided with an additional mixing blade, wherein the additional mixing blade is adjustable in height in the mixing vat along the agitator arm.

By providing an additional mixing blade, it is possible to create a vortex, whereby the agitation creates an intense internal liquid circulation that entrains added ingredients in its flow. Such a vortex ensures a good and rapid mixing of the ingredients, so that the adverse effects of slow or inefficient mixing, such as higher energy consumption, an undesirably high temperature during mixing and/or undesired chemical and/or physical reactions between the various ingredients, can be avoided. Because this additional mixing blade is adjustable in height, it is possible to use the mixing vat for the production of an extensive range of polymer compositions. Indeed, each polymer composition and each added ingredient is characterized by certain physicochemical properties, such as viscosity and dispersibility, and the height of the additional mixing blade is an important factor for optimizing the agitation process.

In a further preferred embodiment, the additional mixing blade consists of a core portion, the core portion having a central opening for receiving the agitator arm, wherein the core portion is provided with three protrusions positioned proportionally along the outer circumference of the core portion and each of the protrusions having the shape of a polygon with an opening.

An additional mixing blade with such a design makes it possible to move the mass in the mixing vat in such a way that a vortex with ideal properties is created. The opening in the protrusions also ensures an ideal displacement of the mass, if these openings were not present, this would result in too great a resistance, causing too large a mass to be moved. On the one hand, this is negative in terms of energy consumption, but it would also lead to an undesired rise in temperature and splashing up of the liquid in the mixing vat. This splashing liquid can adhere to the inside of the mixing vat lid, preventing that part of the liquid from leaving the mixing vat when it is emptied through the outlet nozzle. As a result, it is lost to the batch that is in production. In addition, it remains in the lid when the lid is removed from the mixing vat, where it can react with humidity and begin to cure, giving rise to the formation of unwanted skins.

In a preferred embodiment, the opening in the polygon comprises at least 15% of the area of the polygon. This is because if the opening were not large enough, the resistance experienced by the protrusions during the agitation of the agitator would be too great. Which would lead to the above-mentioned adverse effects, in particular excessive energy consumption and splashing up of the liquid in the mixing vat.

In a further preferred embodiment, the plane of the polygon forms an angle of between 30° and 60° with a horizontal plane. At such an angle, the protrusions encounter the desired resistance that is necessary to allow the mass in the mixing vat to move optimally and thus to cause turbulence in the bulk of the mixing vat's liquid content. This turbulence ensures good mixing of the mass in the mixing vat.

In an embodiment, the agitator comprises at least two agitator arms, wherein the agitator arms are placed concentrically about a central axis and the central axis comprising a U-shaped scraper for scraping the bottom and side walls of the mixing vat, wherein the free ends of the at least two agitator arms are positioned above the U-shaped scraper. This prevents the mass in the mixing vat from adhering to the side walls and the bottom of the mixing vat. This would result in insufficient mixing of the polymer composition, whereby the added ingredients do not get mixed in the part of the mass that is attached to the side walls and to the bottom of the mixing vat, which would eventually lead to a final polymer composition with undesirable physicochemical properties.

In a preferred embodiment, the agitator comprises a pump for placing the mixing vat under vacuum. The pump can be any vacuum pump known in the art, such as a reciprocating compressor, a diaphragm compressor or a vane pump.

In a final aspect, the invention relates to the use of the aforementioned method wherein the polymer composition comprises at least silicone, polyurethanes, acrylates and/or silane modified polymers.

By using the aforementioned method, a vertical flow can be achieved in the somewhat viscous mass of the polymer compositions and liquids or powders added to this mass do not remain on top of the mass for too long before they are mixed into the matrix. In addition to shortening the mixing time, the required speed during mixing can also be reduced. This optimizes energy consumption during mixing. By using this method, the agitation process of each of these polymer compositions can be optimized depending on the physicochemical properties of the specific polymer composition and the ingredients added.

In what follows, the invention is described by way of non-limiting examples illustrating the invention, and which are not intended to and should not be interpreted as limiting the scope of the invention.

### EXAMPLES

### EXAMPLE 1 :

For a polyurethane polymer composition, two polyether polyols are brought together in a mixing vat with an agitator. The agitator comprises a first and a second agitator arm and both agitator arms are provided with a mixing disc or a mixing blade at the free end. The mass in the mixing vat is mixed for two minutes at a speed of 600 rpm and at least 80% vacuum. The mixing vat lid is then opened, and an additional mixing blade is placed on both agitator arms. The mixing vat has an internal height of 100 cm. The first additional mixing blade is placed at a distance of 20 cm from the mixing disc or mixing blade at the free end of the first agitator arm. The second additional mixing blade is placed at a distance of 25 cm from the mixing disc or mixing blade at the free end of the second agitator arm. The distance in this regard is measured parallel to the respective agitator arm from the center of the additional mixing blade to a most proximal side of the mixing disc or to the center of the mixing blade at the free end of said agitator arm. Methylene diphenyl diisocyanate (MDI) is then added at 20% vacuum and a speed of 150 rpm and the resulting composition is stirred for five minutes with the agitator at a speed of 500 rpm and at least 80% vacuum. The placement and position of the additional mixing blade ensures that a vortex is created when the agitator is stirred, with the agitation creating an intense internal circulation of liquid from the center of the mixing vat outwards, then upward along the walls, bending inwards at the top and then coming back down more centrally and entraining added ingredients in its flow. In addition, during agitation, the side walls and the bottom of the mixing vat are scraped by a rotating movement by means of a U-shaped scraper. This prevents the mass in the mixing vat from adhering to the side walls and the bottom of the mixing vat.

### EXAMPLE 2:

For a silane-modified polymer composition, the various raw materials are weighed and placed in a mixing vat with an agitator. The agitator comprises a first and a second agitator arm and both agitator arms are provided with a mixing disc or a mixing blade at the free end. Each agitator arm is also equipped with an additional mixing blade. The first mixing blade is 50% in the mass present in the mixing vat and the second additional mixing blade is located 6 cm above the level of the mass in the mixing vat, measured parallel to the respective agitator arm from an underside of the additional mixing blade. Both additional mixing blades are now at the height of the free surface of the mass, where the ingredients are added. Due to such a positioning of the mixing blades, the added ingredients will be immersed in the mass extremely quickly and the contact time between the undiluted ingredients and the mass, as well as the associated undesirable physical and chemical reactions, will be minimized.

## Claims

1. A method of agitation of a polymer composition in a mixing vat by means of an agitator, wherein one or more ingredients are added to a mass present in the mixing vat, wherein the agitator comprises one or more agitator arms, wherein the one or more agitator arms comprise a free end which is located during agitation in the mass in the mixing vat, wherein the one or more agitator arms are provided with a mixing disc or a mixing blade at the free end and wherein at least one of the agitator arms is provided with an additional mixing blade for creating a vortex in the mass in the mixing vat, **characterized in that** before adding the one or more ingredients the additional mixing blade is placed at a distance from the mixing disc or mixing blade at the free end of said agitator arm, wherein the distance is at least 15% of an internal height of the mixing vat, wherein the distance is measured parallel to said agitator arm from the center of the additional mixing blade to a most proximal side of the mixing disc or to the center of the mixing blade at the free end of said agitator arm, and wherein the additional mixing blade is placed at most 10 cm above a level of the mass in the mixing vat, measured parallel to said agitator arm from an underside of the additional mixing blade.

2. The method according to any of the preceding claims, **characterized in that** the agitator comprises a first and a second agitator arm, provided with a first and a second additional mixing blade, respectively, wherein the first and second additional mixing blades are positioned a first distance and a second distance, respectively, from the mixing disc or mixing blade at the free end of the respective agitator arm, wherein the distance between the first and second additional mixing blades is at least 4% and at most 10% of the internal height of the mixing vat.

3. The method according to claim 2, **characterized in that** before adding the one or more ingredients, 45%-55% of the first additional mixing blade is in the mass present in the mixing vat and the second additional mixing blade is at most 10 cm above the level of the mass in the mixing vat, measured parallel to said agitator arm from an underside of the additional mixing blade.

4. The method according to claim 2, **characterized in that** the additional mixing blades are placed at a distance from the mixing disc or mixing blade at the free end of said agitator arm, wherein the distance is at most 40% of an internal height of the mixing vat.

5. The method according to any of the preceding claims, **characterized in that** side walls and bottom of the mixing vat are scraped off by a rotating movement during stirring.

6. The method according to any of the preceding claims, **characterized in that** at least during part of the method the mixing vat with contents is placed under reduced pressure.

7. The method according to any of the preceding claims, **characterized in that** a polymer or a polymer dispersion is present in the mixing vat and one or more ingredients are added in powder or liquid form, wherein the one or more added ingredients are selected from the group of plasticizers, crosslinkers, extenders, fillers, thickeners, catalysts and/or pigments.

8. The method according to claim 7, **characterized in that** a crosslinker is added to a reactive polymer, **characterized in that** the crosslinker is dispersed in the contents of the mixing vat and that during dispersion the agitation speed of the agitator in the mixing vat is limited to at most 300 revolutions per minute.

9. An agitator of a mixing vat, the agitator comprising a lid for closing the mixing vat, wherein the agitator comprises one or more agitator arms, wherein the one or more agitator arms extend through the lid, wherein the one or more agitator arms comprise a free end, wherein the one or more agitator arms are provided with a mixing disc or a mixing blade at the free end and wherein at least one of the agitator arms is provided with an additional mixing blade, **characterized in that** the additional mixing blade is adjustable in height in the mixing vat along the agitator arm.

10. The agitator according to claim 9, **characterized in that** the additional mixing blade consists of a core portion, the core portion having a central opening for receiving the agitator arm, wherein the core portion is provided with three protrusions positioned proportionally along the outer circumference of the core portion and each of the protrusions having the shape of a polygon with an opening.

11. The agitator according to claim 10, **characterized in that** the plane of the polygon forms an angle of between 30° and 60° with a horizontal plane.

12. The agitator according to any of the preceding claims 10-11, **characterized in that** the opening in the polygon comprises at least 15% of the area of the polygon.

13. The agitator according to any of the preceding claims 9-12, **characterized in that** the agitator comprises at least two agitator arms, wherein the agitator arms are placed concentrically about a central axis and the central axis comprising a U-shaped scraper for scraping the bottom and side walls of the mixing vat, wherein the free ends of the at least two agitator arms are positioned above the U-shaped scraper.

14. The agitator according to any of the preceding claims 9-13, **characterized in that** the agitator comprises a pump for placing the mixing vat under vacuum.

15. Use of a method according to any of the preceding claims 1-8, **characterized in that** the polymer composition comprises at least silicone, polyurethanes, acrylates and/or silane modified polymers.
